# EUROPEAN PATENT APPLICATION

(11) **EP 4 174 798 A1**
(43) Date of publication of application: **03.05.2023**
(21) Application number: 22199824.8
(22) Date of filing: 05.10.2022
(51) Int. Cl.: G06V 20/50

(54) **AN ELECTRONIC DEVICE AND A METHOD FOR OPTICAL DEVICE COLLABORATION**

(30) Priority: 28.10.2021 SE 2151314
(71) Applicant: Sony Group Corporation, Minato-Ku, Tokyo, 108-0075 (JP)
(72) Inventor: EXNER, Peter, Basingstoke, RG22 4SB (GB); BERGKVIST, Hannes, Basingstoke, RG22 4SB (GB)
(74) Representative: Aera A/S

(57) **Abstract**

An electronic device is provided. The electronic device is configured to obtain, from a first optical device, a first performance parameter indicative of a detection performance of a first detection model on the first optical device and a second performance parameter indicative of a detection performance of a second detection model on the first optical device. The electronic device is configured to obtain, from a second optical device, a third performance parameter indicative of a detection performance of the first detection model on the second optical device and a fourth performance parameter indicative of a detection performance of the second detection model on the second optical device. The electronic device is configured to assign, based on the first performance parameter, the second performance parameter, the third performance parameter, and the fourth performance parameter, the first detection model to the first optical device or the second optical device and the second detection model to the first optical device or the second optical device.

## Description

### TECHNICAL FIELD

The present disclosure pertains to the field of Internet of things (IoT) and optical devices, and relates to an electronic device and to a method for optical device collaboration.

### BACKGROUND

Today, many electronic devices, such as IoT devices and optical devices, are used for different tasks, such as detecting items and/or tracking subjects, such as tracking activity of subjects. Models, such as machine learning models, may be used to detect items and/or track subjects. However, it may be difficult, when an electronic device has limited capabilities, to determine which model to use and/or which electronic device to use with which model.

### SUMMARY

Optical devices, such as cameras, may be used to detect items and track subjects (such as keep track of individuals and/or other objects). An output of the optical device may be a stream of positions in three dimensions, 3D. The optical devices may use various detection models and may capture each subject's key points, such as human joints. The output from the optical devices and/or detection models may be used for activity detection and/or counting (for example in an exercising environment, such as a gym facility). Some systems feature automatic optical device calibration to fuse information from multiple optical devices, calculating optical device location and orientation by itself without the need for any dedicated equipment. Such systems may run on a high-performance dedicated server. However, another solution is to use electronic devices, such as inference devices, for running detection models, having a lower cost and with lower performance than a dedicated high-performance dedicated server. For example, an optical device, such as a camera, may comprise an electronic device for running detection models. However, it may be difficult, when the electronic device has limited capabilities, to determine which model to use and/or which optical device to use with which model and when. For example, an electronic device may only be capable of running one detection model at a time. In other words, an electronic device may not be capable of running several detection models at a time for each frame. Further, a location and/or angle of an optical device and a position and/or direction of a subject may have an influence on the performance of an electronic device when running a detection model. In other words, optical devices may be more or less suitable of running a certain detection model at certain times.

Accordingly, there is a need for electronic devices and methods for optical device (such as camera) collaboration, which may mitigate, alleviate, or address the shortcomings existing and may provide an improved assignment of detection models for optical devices, an improved optical device collaboration, and with improved capability allocation (such as allocation of resources) based on detection performance.

An electronic device is provided. The electronic device comprises memory circuitry, processor circuitry, and interface circuitry. The electronic device is configured to obtain, from a first optical device, a first performance parameter indicative of a detection performance of a first detection model on the first optical device and a second performance parameter indicative of a detection performance of a second detection model on the first optical device. The electronic device is configured to obtain, from a second optical device, a third performance parameter indicative of a detection performance of the first detection model on the second optical device and a fourth performance parameter indicative of a detection performance of the second detection model on the second optical device. The electronic device can be configured to assign, based on the first performance parameter, and/or the second performance parameter, and/or the third performance parameter, and/or the fourth performance parameter, the first detection model to the first optical device or the second optical device and the second detection model to the first optical device or the second optical device.

Further a method, performed by an electronic device, is disclosed. The method comprises obtaining, from a first optical device, a first performance parameter indicative of a detection performance of a first detection model on the first optical device and a second performance parameter indicative of a detection performance of a second detection model on the first optical device. The method comprises obtaining, from a second optical device, a third performance parameter indicative of a detection performance of the first detection model on the second optical device and a fourth performance parameter indicative of a detection performance of the second detection model on the second optical device. The method comprises optionally assigning, based on the first performance parameter, the second performance parameter, the third performance parameter, and the fourth performance parameter, the first detection model to the first optical device or the second optical device and the second detection model to the first optical device or the second optical device.

Further a system comprising an electronic device as disclosed herein and one or more optical devices as disclosed herein.

The disclosed electronic device and related method may provide an improved assignment of a detection model for an optical device, an improved optical device collaboration, improved capability allocation (such as allocation of resources) based on detection performance, and improved detection performance of the optical device when running the assigned detection model. In other words, an optimal (such as most appropriate) detection model may be assigned for each optical device, such as the first optical device, the second optical device, and/or the third optical device.

The present disclosure provides an improved usage of capabilities of optical devices, such as an improved capability allocation (such as allocation of resources). In other words, since the detection models are distributed among the optical devices, each detection model is run within the inference capability of the optical device while ensuring that the first detection model and the second detection model are run and/or executed on at least one optical device. It may be appreciated that the present disclosure allows for collaboration of detection for optical devices. For example, the present disclosure allows for collaboration of detection for optical devices by assigning detection models to the optical devices, based on the performance of the detection models on the optical devices. Further, it is an advantage of the present disclosure that optical devices may have integrated sensing (such as integrated detection) and/or inference capabilities at a cost lower than for example systems based on artificial intelligence processing power.

It is an advantage of the present disclosure that it allows to scale an area of detection and/or to scale the use cases of detection, for example by using lower cost optical devices with limited capabilities to run the same detection models from multiple angles.

### BRIEF DESCRIPTION OF THE DRAWINGS

The above and other features and advantages of the present disclosure will become readily apparent to those skilled in the art by the following detailed description of examples thereof with reference to the attached drawings, in which:
Fig. 1 is a block diagram illustrating an example electronic device according to this disclosure,
Figs. 2A-2G shows an example detection scenario applying the technique disclosed herein, and
Figs. 3A-3D is a flow-chart illustrating an example method, performed in an electronic device according to this disclosure.

### DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example needs not have all the aspects or advantages shown. An aspect or an advantage described in conjunction with a particular example is not necessarily limited to that example and can be practiced in any other examples even if not so illustrated, or if not so explicitly described.

The figures are schematic and simplified for clarity, and they merely show details which aid understanding the disclosure, while other details have been left out. Throughout, the same reference numerals are used for identical or corresponding parts.

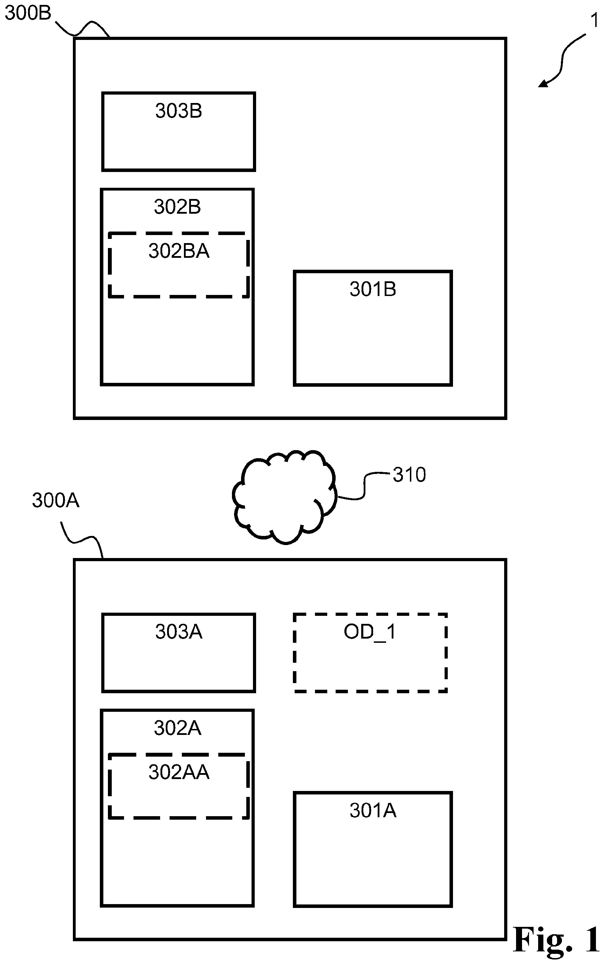

Fig. 1 shows an example system 1 comprising an electronic device 300B according to the disclosure acting as a server device and an electronic device 300A according to the disclosure acting as an electronic device, such as an optical device.

Fig. 1 shows a block diagram illustrating an electronic device 300B according to the disclosure acting as a server device and a block diagram illustrating an electronic device 300A according to the disclosure acting as an electronic device, such as an optical device.

The electronic device 300A acting as an optical device may be configured to communicate with the electronic device 300B acting as a server device via a network 310 (such as an external network, for example a wired communication system and/or a wireless communication system).

The electronic device 300A, 300B comprises memory circuitry 301A, 301B, interface circuitry 303A, 303B, and processor circuitry 302A, 302B. Optionally, the processor circuitry 302A comprises inference circuitry 302AA configured to run, execute, and/or operate according to a detection model, such as a first detection model, a second detection model, and/or a third detection model. Optionally, the processor circuitry 302B comprises inference circuitry 302BA configured to run, execute, and/or operate according to a detection model, such as a first detection model, a second detection model, and/or a third detection model.

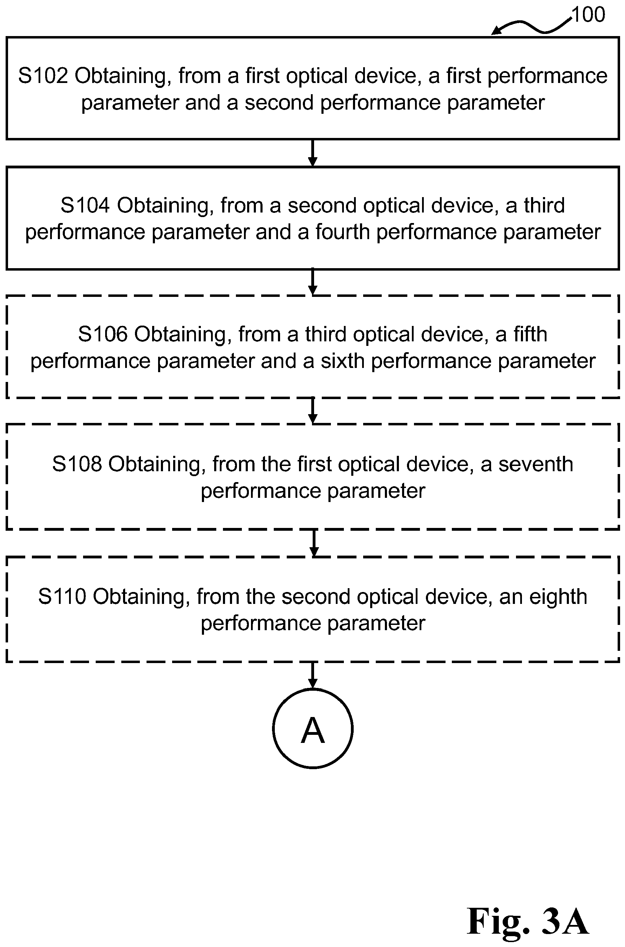

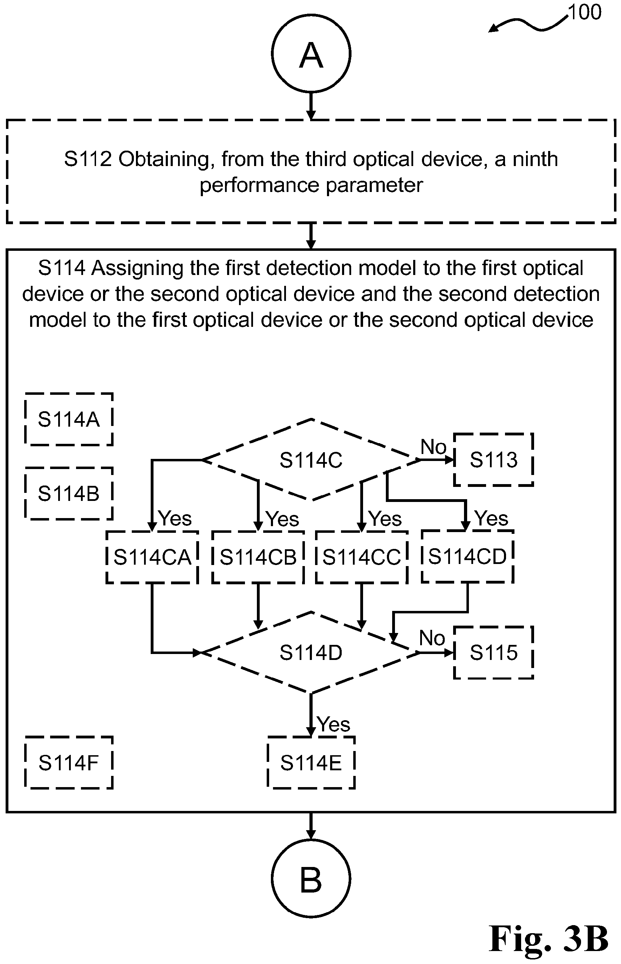

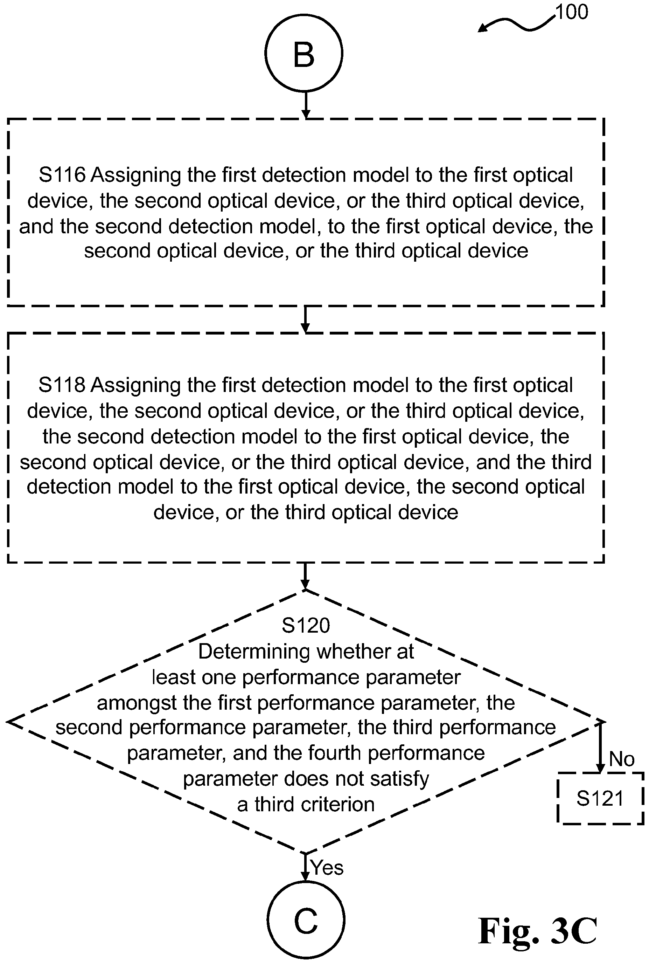

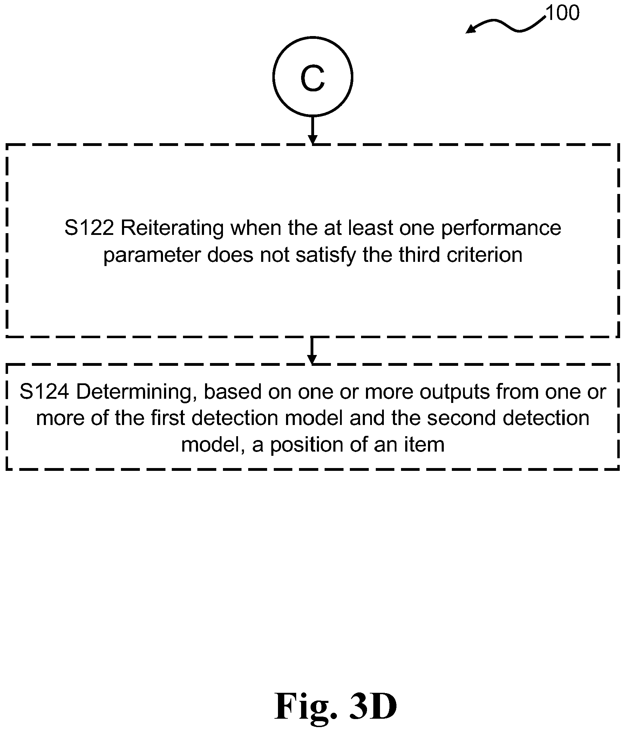

The electronic device 300A, 300B may be configured to perform any of the methods disclosed in Figs. 3A, 3B, 3C, and 3D. In other words, the electronic device 300A, 300B may be configured for supporting collaboration between optical devices, such as detection collaboration between optical devices. In other words, the electronic device 300A, 300B may be configured for assignment of one or more detection models to one or more optical devices.

The electronic device 300A may for example comprise an inference device, an optical device, a portable electronic device, a wireless device, a wired device, and/or an IoT device.

The electronic device 300A, 300B is configured to obtain (such as using the processor circuitry 302A, 302B and/or via the interface circuitry 303A, 303B), from a first optical device, a first performance parameter indicative of a detection performance of a first detection model on the first optical device. The first performance parameter may be seen as a performance of the first optical device running the first detection model. In other words, a performance parameter may comprise (such as include) a detection performance of a detection model on an optical device. For example, the first performance parameter may comprise a detection performance of a first detection model on the first optical device.

The electronic device 300A, 300B is configured to obtain (such as using the processor circuitry 302A, 302B and/or via the interface circuitry 303A, 303B), from the first optical device, a second performance parameter indicative of a detection performance of a second detection model on the first optical device. The second performance parameter may be seen as a performance of the first optical device running the second detection model.

The electronic device 300A, 300A is configured to obtain (such as using the processor circuitry 302A, 302B and/or via the interface circuitry 303A, 303B), from a second optical device, a third performance parameter indicative of a detection performance of the first detection model on the second optical device. The third performance parameter may be seen as a performance of the second optical device running the first detection model.

The electronic device 300A, 300B is configured to obtain (such as using the processor circuitry 302A, 302B and/or via the interface circuitry 303A, 303B), from the second optical device, a fourth performance parameter indicative of a detection performance of the second detection model on the second optical device. The fourth performance parameter may be seen as a performance of the second optical device running the second detection model. To obtain, from an optical device, a performance parameter may for example comprise to retrieve, to receive, to determine, and/or to select a performance parameter.

An optical device as disclosed herein may be seen as a device comprising an optical sensor. An optical device (such as the first optical device, the second optical device, and/or a third optical device) may comprise one or more of: an image sensor (such as complementary metal-oxide-semiconductor, CMOS, and/or charge-coupled devices, CCD), a capturing device, a wall-mounted camera, a web-cam, a closed circuit television, CCTV, an infrared sensor, a light sensor, and an optical movement sensor. An optical device may be configured to generate one or more images, such as one or more images frames, such as generating a video feed. An optical device may be seen as a camera in a room where detection of items and/or tracking of subjects is of interest. In other words, the electronic device 300A, 300B may be seen as an electronic device for detection of items and/or tracking of subjects. The electronic device 300A, 300B may for example be seen as or denoted as an electronic activity detection device. The electronic device 300A, 300B may provide for collaboration of detection for optical devices by assigning detection models to the optical devices, e.g., based on the performance of the detection models on the optical devices. In other words, the electronic device 300A, 300B may be for collaboration of optical devices, capability allocation between optical devices, and/or assignment of detection models for optical devices, e.g., by detecting human biomarkers and/or objects. A human biomarker may for example comprise a pose, such as a posture of a human, and/or a face of a human.

For example, the electronic device 300A, 300B may use the optical device for the detection of items and/or tracking of subjects. The optical device may for example be seen as an optical device for detecting human biomarkers. For example, an optical device may comprise a camera in an exercising environment, such as a gym facility. The first optical device may be seen as a first camera positioned in a first position in a gym facility and the second optical device may be seen as a second camera positioned in a second position in the gym facility. The first optical device and the second optical device may be configured to collaborate in the detection of items and/or tracking of subjects. Each optical device may be configured to run and/or operate all the detection models, such as the first detection model, the second detection model, and/or the third detection model. An optical device may be configured to run and/or operate only one detection model at a time, such as per frame. In other words, each camera device may run a detection model inference for each detection model, such as for an object detection model, a pose detection model, and a face detection model, on one frame of a video feed.

In one or more example electronic devices, the performance parameters are distributed from each optical device to every other optical device. For example, the electronic device 300A comprises the first optical device OD_1. In one or more example electronic devices, each optical device may be comprised in an electronic device.

In one or more example electronic devices, the performance parameters are obtained by a master optical device from every other optical device. The electronic device 300A, 300B may then obtain the performance parameters from the master optical device.

Optionally, an optical device may be configured to run and/or operate more than one detection model at a time, such as per frame. In other words, an optical device may be capable (such as have computational resources) to run more than one detection model per frame.

The electronic device 300A, 300B, the first optical device, and the second optical device may be seen as a system for optical device collaboration, such as an optical device collaboration system. The system may optionally comprise a network node (such as a base station, not shown) that the electronic device 300B acting as server device and the electronic device 300A and/or the optical devices may communicate through. A network node refers to an access point and/or radio access network node operating in the radio access network, such as a base station, an evolved Node B, eNB, a global Node B, gNB in New Radio, NR. In one or more examples, the Radio Access Network, RAN node is a functional unit which may be distributed in several physical units.

The electronic device 300A, 300B and the optical devices may use a cellular system, for example, a 3GPP wireless communication system and/or the internet, and/or a local communication system, such as short-range wireless communications systems, such as Wi-Fi, Bluetooth, Zigbee, IEEE 802.11, IEEE 802.15 to communicate. The electronic device 300B acting as server device may be seen as a device configured to act as a server in communication with a client device, where the electronic device 300A and/or the optical devices are configured to act as a clients.

A detection model as disclosed herein may be seen as a model, such as a machine learning, ML, model and/or an inference model for detecting one or more items. Example of detection models include the first detection model, the second detection model, and/or a third detection model disclosed herein. Detecting one or more items may comprise the detection of objects, detection (recognition and/or identification) of faces, detection (recognition) of poses, detection of activity, and/or tracking of one or more subjects. A detection model as disclosed herein, may be seen as an item detector, such as an object detector, a face detector, a pose detector, an activity detector, and/or a subject tracker. The second detection model may be different from the first detection model and/or the third detection model. The second detection model may be different in type from the first detection model and/or the third detection model. For example, when the first detection model is an object detection model, the second detection model may be a pose detection model and/or a face detection (recognition) model, and optionally the third detection model may be a pose detection model and/or a face detection (recognition) model. An optical device as disclosed herein may be configured to use a pipeline of detection models, such as a detection model configured to detect an object, a detection model configured to detect a pose, and/or a detection model configured to detect a face.

A detection model as referred to herein (such as the first detection model, second detection model, and/or third detection model) may be seen as a model and/or a scheme and/or a mechanism and/or a method configured to provide, based on operational data, such as optical data, one or more detections of one or more items, such as of an object, a pose, an activity, and/or a face. A detection model as referred to herein (such as the first detection model, second detection model, and/or third detection model) may comprise and/or use one or more of the following ML model techniques: Support Vector Machines, Neural Networks (such as Yolo, convolutional neural network, CNN, and/or Transformer networks).

In one or more example electronic devices, a detection model as referred to herein may be stored on a non-transitory storage medium (for example, memory circuitry 301A, 301B) and/or a non-transitory storage medium of an optical device. A detection model may be stored on a non-transitory storage medium of the electronic device 300A, 300B and/or of an optical device being configured to execute the model. In one or more example electronic devices, a detection model may comprise detection model data and or computer readable instructions (for example based on operational data, such as optical data obtained by an optical sensor of an optical device, and/or such as historical operational data, such as historical optical data obtained by an optical sensor of an optical device). The detection model data and/or the computer readable instructions may be used by the electronic device 300A, 300B and/or the optical devices. A detection model (such as detection model data and/or the computer readable instructions) may be used by the electronic device 300A, 300B and/or the optical devices to detect, identify, and/or track an item and/or a subject. In other words, a detection model may comprise pre-stored detection model data indicative of one or more items, activities, and/or subjects to identify. The electronic device 300A, 300B and/or the optical devices may be configured to determine, based a detection model (which comprises the detection model data), an item, an object, a pose, an activity, a face, and/or subject by running an inference based on the detection model.

A performance parameter as disclosed herein may be seen as a performance of an optical device when running a detection model. In other words, a performance parameter may be seen as a performance of an optical device when running a certain detection model for a certain frame as input. A performance parameter may comprise a score, such as a confidence score of detection. In other words, a performance parameter may comprise a confidence score indicating a confidence and/or a probability that a detection, such as an output of a detection model, is correct. For example, when the first detection model is an object detection model, the first optical device and the second optical device running the first detection model may output a first performance parameter and a third performance parameter respectively, each comprising a confidence score of detection of an object. For example, when the second detection model is a pose detection model, the first optical device and the second optical device running the second detection model may output a second performance parameter and a fourth performance parameter respectively, each comprising a confidence score of detection of a pose. To obtain a performance parameter may comprise to obtain a performance indicator, such as a first performance indicator, a second performance indicator, a third performance indicator and/or a fourth performance indicator. A performance parameter may comprise an interval, such as a confidence interval of detection.

The electronic device 300A, 300B is configured to assign (such as using the processor circuitry 302A, 302B and/or via the interface circuitry 303A, 303B), based on the first performance parameter, the second performance parameter, the third performance parameter, and the fourth performance parameter, the first detection model to the first optical device or the second optical device and the second detection model to the first optical device or the second optical device. In other words, the second detection model may be assigned to the optical device that has not been assigned to a detection model, such as assigning the unassigned or remaining optical device and/or the unassigned or remaining detection model. In other words, each optical device may be running a different model. To assign a detection model to an optical device may be seen as assigning a detection model that an optical device is assigned to run for a given period. To assign a detection model to an optical device may be seen as allocating a detection model to an optical device and/or associating a detection model to an optical device. By assigning detection models based on the performance of the optical devices when running the detection models, the present disclosure improves the capability allocation when performing a task of detecting items and/or tracking activity and/or subjects. In other words, since the detection models are distributed among the optical devices, each detection model is run within the inference capability of the optical device and on the optical device having the best performance for a given detection model. In other words, the electronic device 300A, 300B may be configured to identify the best, such as optimal, detection model for each optical device, based on the view (such as field of view) and/or the position related to the item and/or subject to detect. It may be appreciated that the present disclosure allows for collaboration of detection for optical devices. For example, the present disclosure allows for collaboration of detection for optical devices by assigning detection models to the optical devices, based on the performance of the detection models on the optical devices.

Optionally, the electronic device 300A, 300B may be configured to assign the first detection model and the second detection model to the same optical device. For example, when the first optical device has a better performance when running the first detection model and the second detection model than the performance of the second optical device when running the first detection model and the second detection model, the electronic device 300A, 300B may be configured to assign the first detection model and the second detection model to the first optical device. It may be appreciated that in this scenario the first optical device has the capability of running both the first detection model and the second detection model for the same frame.

In one or more example electronic devices, the assignment of the first detection model and/or the second detection model comprises to generate (such as using the processor circuitry 302A, 302B and/or via the interface circuitry 303A, 303B) a decision tree comprising a plurality of nodes. In other words, the electronic device 300A, 300B, is configured to generate a decision tree comprising a plurality of nodes. In one or more example electronic devices, each node represents an optical device, a detection model, and a corresponding performance parameter. In other words, each node in the decision tree represents a camera, an inference model, and the associated performance number. In one or more example electronic devices, each level of the decision tree comprises nodes from one optical device only. The electronic device 300A, 300B, may be configured to create nodes only for an inference where an optical device has run a detection model and have determined an associated performance parameter for the detection model run on the optical device. The electronic device 300A, 300B, may be configured to when generating the decision tree, to start from a root of the decision tree. The root of the decision tree may determine which optical device to start with for a first level of the decision tree.

In one or more example electronic devices, each optical device is configured to generate a decision tree comprising a plurality of nodes, and where each node represents an optical device, a detection model, and a corresponding performance parameter.

In one or more example electronic devices, a master optical device is configured to generate a decision tree comprising a plurality of nodes, and where each node represents an optical device, a detection model, and a corresponding performance parameter.

In one or more example electronic devices, the assignment of the first detection model and/or the second detection model comprises to prune (such as using the processor circuitry 302A, 302B and/or via the interface circuitry 303A, 303B) the decision tree from paths that do not represent at least one of each detection model. To prune may be seen as removing the paths that do not represent at least one of each detection model from the decision tree. In other words, the electronic device 300A, 300B, is configured to prune the decision tree from paths that do not represent at least one of each detection model. It may be appreciated that the electronic device 300A, 300B, is configured to prune the decision tree from paths that do not include at least one of each model and their performance parameters. A path may be seen as comprising at least two nodes, such as at least one node from each level of the decision tree. Optionally, a path may comprise more than one of each detection model, for example when the number of optical devices is larger than the number of detection models. In other words, the electronic device 300A, 300B may be configured to ensure that each type of detection model, such as the first detection model and the second detection model, is executed on at least one optical device, such as for each frame. In other words, a criterion may comprise to prune the decision tree from paths that do not represent at least one of each detection model.

In one or more example electronic devices, the assignment of the first detection model and/or the second detection model comprises to determine (such as using the processor circuitry 302A, 302B and/or via the interface circuitry 303A, 303B) whether a path of the decision tree satisfies a first criterion. In other words, the electronic device 300A, 300B, is configured to determine whether a path of the decision tree satisfies a first criterion. The first criterion may be seen as a detection performance criterion. The electronic device 300A, 300B, is configured to determine whether the performance parameters associated with the nodes of a path of the decision tree are above a detection performance. The first criterion may comprise a first threshold. For example, a path of the decision tree satisfies the first criterion, when the performance parameter is above the first threshold. In other words, the electronic device 300A, 300B, may be configured to perform an initial pruning of paths of the decision tree based on the sum of performance parameters. When the electronic device determines that a path of the decision tree satisfies the first criterion, the electronic device is configured to assign the detection models, such as the first detection model, the second detection model, and/or the third detection model, to the optical devices, such as the first optical device, the second optical device, and/or the third optical device, in accordance with the nodes of the path that satisfies the first criterion. When the electronic device determines that no path of the decision tree satisfies the first criterion, the electronic device is configured to refrain from assigning the detection models to the optical devices. In other words, the electronic device 300A, 300B, may be configured to identify an optimal path of the decision tree, by searching the decision tree from the root to a node, such as a leaf, such as for calculating the weighted sum of a path.

In one or more example electronic devices, the determination of whether a path of the decision tree satisfies the first criterion comprises to determine (such as using the processor circuitry 302A, 302B and/or via the interface circuitry 303A, 303B) a path of the decision tree with the largest sum of performance parameters. In other words, the electronic device 300A, 300B, is configured to determine a path of the decision tree with the largest sum of performance parameters. In other words, the electronic device 300A, 300B, is configured to determine which path has the largest sum of performance parameters associated with the nodes of a path.

In one or more example electronic devices, the determination of whether a path of the decision tree satisfies the first criterion comprises to determine (such as using the processor circuitry 302A, 302B and/or via the interface circuitry 303A, 303B) a path of the decision tree with the largest sum of weighted performance parameters. In other words, the electronic device 300A, 300B, is configured to determine a path of the decision tree with the largest sum of weighted performance parameters. In other words, the electronic device 300A, 300B, is configured to determine which path has the largest sum of weighted performance parameters associated with the nodes of a path. In one or more example electronic devices, the electronic device 300A, 300B is configured to determine a path of the decision tree with the largest sum of weighted performance parameters per detection model. For example, a certain model may have a higher priority than other models, and the electronic device 300A, 300B may be configured to assign the detection models such that the given detection model having higher priority has the best performance.

In one or more example electronic devices, the determination of whether a path of the decision tree satisfies the first criterion comprises to determine (such as using the processor circuitry 302A, 302B and/or via the interface circuitry 303A, 303B) a path of the decision tree with the largest sum of weighted performance parameters minus the variance of the detection performances. In other words, the electronic device 300A, 300B, is configured to determine a path of the decision tree with the largest sum of weighted performance parameters minus the variance of the detection performances. In other words, the electronic device 300A, 300B, is configured to determine which path has the largest sum of weighted performance parameters associated with the nodes of a path minus the variance of the detection performances. In one or more example electronic devices, the electronic device 300A, 300B is configured to determine a path of the decision tree with the largest sum of weighted performance parameters minus the variance of the detection performances per detection model. For example, a certain model may have a higher priority than other models, and the electronic device 300A, 300B may be configured to assign the detection models such that the given detection model having higher priority has the best performance.

In one or more example electronic devices, the determination of whether a path of the decision tree satisfies the first criterion comprises to consider (such as using the processor circuitry 302A, 302B and/or via the interface circuitry 303A, 303B) a number of detections. In other words, the electronic device 300A, 300B, is configured to consider a number of detections. The electronic device 300A, 300B, may be configured to consider a number of detections when determining the path of the decision tree with the largest sum of performance parameters, the path of the decision tree with the largest sum of weighted performance parameters, and/or the path of the decision tree with the largest sum of weighted performance parameters minus the variance of the detection performances. In other words, a performance parameter may comprise and/or be based on a number of detections and/or inferences of an optical device. The number of detections may be considered when determining a performance parameter. For example, paths having a larger number of detections may be considered as being superior to paths with a lower number of detections. In other words, the number of detections and/or inferences may be part of a set of performance parameters associated with a node of the decision tree.

In one or more example electronic devices, the assignment of the first detection model and/or the second detection model comprises to determine (such as using the processor circuitry 302A, 302B and/or via the interface circuitry 303A, 303B) whether a performance parameter of a node of the decision tree does not satisfy a second criterion.

In other words, the electronic device 300A, 300B, is configured to determine whether a performance parameter of a node of the decision tree does not satisfy a second criterion. The second criterion may be seen as a performance criterion, such as a second detection performance criterion. In other words, the second criterion may comprise a second threshold. For example, the performance parameter (such as the detection performance) of a node (such as associated with a node) of the decision tree does not satisfy the second criterion, when the performance parameter is below the second threshold. When the electronic device determines that a performance parameter of a node of the decision tree does not satisfy the second criterion, the electronic device is configured to prune the node that has a performance parameter which does not satisfy the second criterion. When the electronic device determines that a performance parameter of a node of the decision tree satisfies the second criterion, the electronic device is configured to refrain from pruning the node that has a performance parameter which satisfies the second criterion. The second threshold may for example be 0.8, 0.85, 0.9, and/or 0.95.

In one or more example electronic devices, the assignment of the first detection model and/or the second detection model comprises to prune (such as using the processor circuitry 302A, 302B and/or via the interface circuitry 303A, 303B) the node that has a performance parameter which does not satisfy the second criterion. To prune the node that has a performance parameter which does not satisfy the second criterion may be seen as removing the nodes that do not satisfy the second criterion.

In other words, the electronic device 300A, 300B, is configured to prune the node (such as one or more nodes) that has a performance parameter which does not satisfy the second criterion. The second criterion may be seen as a detection performance criterion.

In one or more example electronic devices, the assignment of the first detection model and/or the second detection model comprises to determine (such as using the processor circuitry 302A, 302B and/or via the interface circuitry 303A, 303B) based on the first performance parameter, the second performance parameter, the third performance parameter, and the fourth performance parameter, an optical device configuration indicative of a detection model to be used by the first optical device and a detection model to be used by the second optical device. In other words, the electronic device 300A, 300B, is configured to determine an optical device configuration indicative of a detection model to be used by the first optical device and a detection model to be used by the second optical device. The optical device configuration may be seen as a configuration indicating which detection model to be used by which optical device. In other words, the optical device configuration may comprise and/or include a detection model, such as the first detection model, the second detection model, and/or the third detection model.

In one or more example electronic devices, the assignment of the first detection model and/or the second detection model is based on the optical device configuration. The optical device configuration may be transmitted to each optical device. For example, the optical device configuration may comprise a first configuration for the first optical device, a second configuration for the second optical device, and/or a third configuration for the third optical device. The optical device configuration may be transmitted to a master optical device which may then distribute the optical device configuration to the other optical devices.

The optical device configuration may comprise instructions for the optical devices indicating which detection model to use and for which period of time.

In one or more example electronic devices, the electronic device (300A, 300B) is configured to obtain (such as using the processor circuitry 302A, 302B and/or via the interface circuitry 303A, 303B), from a third optical device, a fifth performance parameter indicative of a detection performance of the first detection model on the third optical device and a sixth performance parameter indicative of a detection performance of the second detection model on the third optical device. The fifth performance parameter may be seen as a performance of the third optical device running the first detection model. The sixth performance parameter may be seen as a performance of the third optical device running the second detection model.

In one or more example electronic devices, the electronic device (300A, 300B) is configured to assign (such as using the processor circuitry 302A, 302B and/or via the interface circuitry 303A, 303B), based on the fifth performance parameter and the sixth performance parameter, the first detection model to the first optical device, the second optical device, or the third optical device, and the second detection model, to the first optical device, the second optical device, or the third optical device. In this scenario, there is three optical devices and two detection models. Therefore, at least one optical device will not have a detection model assigned. In other words, the second detection model may be assigned to one of the optical devices that has not been assigned to a detection model, such as assigning one of the unassigned or remaining optical device and/or the unassigned or remaining detection model. In other words, each optical device may be running a different detection model and one optical device may not run a detection model.

In one or more example electronic devices, the electronic device (300A, 300B) is configured to obtain (such as using the processor circuitry 302A, 302B and/or via the interface circuitry 303A, 303B), from the first optical device, a seventh performance parameter indicative of a detection performance of a third detection model on the first optical device. The seventh performance parameter may be seen as a performance of the first optical device running the third detection model.

In one or more example electronic devices, the electronic device (300A, 300B) is configured to obtain (such as using the processor circuitry 302A, 302B and/or via the interface circuitry 303A, 303B), from the second optical device, an eighth performance parameter indicative of a detection performance of the third detection model on the second optical device. The eighth performance parameter may be seen as a performance of the second optical device running the third detection model.

In one or more example electronic devices, the electronic device (300A, 300B) is configured to obtain (such as using the processor circuitry 302A, 302B and/or via the interface circuitry 303A, 303B), a ninth performance parameter indicative of a detection performance of the third detection model on the third optical device. The ninth performance parameter may be seen as a performance of the third optical device running the third detection model.

In one or more example electronic devices, the electronic device (300A, 300B) is configured to assign (such as using the processor circuitry 302A, 302B and/or via the interface circuitry 303A, 303B), based on the seventh performance parameter, the eighth performance parameter, and the ninth performance parameter, the first detection model to the first optical device, the second optical device, or the third optical device, the second detection model to the first optical device, the second optical device, or the third optical device, and the third detection model to the first optical device, the second optical device, or the third optical device. In other words, the second detection model may be assigned to the one of the optical devices that has not been assigned to a detection model, such as assigning one of the unassigned or remaining optical devices and/or one the unassigned or remaining detection models. In other words, each optical device may be running a different model. In this scenario, there is three optical devices and three detection models. Therefore, at least one optical device will not have a detection model assigned. Optionally, when an optical device has the capability of running more than one detection model, one or two optical devices may remain unassigned, such as without a detection model assigned to them.

In one or more example electronic devices, the first detection model is configured to detect an object. For example, the object may be seen as an item generally classified as an object and/or a shape of an item (such as a part of an object, an object of a specific shape). In other words, the object may be denoted as a feature (for example a feature that the first detection model may be able to detect, (such as trained to detect) such as a shape). For example, the object may comprise an object such as a gym facility object, such as representative of a gym facility equipment, for example weights, such as a specific weight, for example a dumbbell. The object may comprise a specific type of objects, such as a specific type of gym equipment object (such as representative of a specific weight of a weight plate). The object may comprise an object such as a type of objects, such as gym facility machines, for example for detecting gym facility machines when capturing a video feed, such as in an image frame. The object may comprise one or more objects assigned to an area monitored by the optical devices.

In one or more example electronic devices, the second detection model is configured to detect a pose. For example, the pose may be seen as an item generally classified as a pose and/or a shape of a pose (such as a part of a subject representing a pose, a pose of a specific shape and/or nature). In other words, the pose may be denoted as a feature (for example a feature that the second detection model may be able to detect, (such as trained to detect) such as a pose). For example, the pose may comprise a human pose and/or a subject pose. For example, a pose may be seen as a spatial arrangement of limbs. For example, a pose may be seen as a certain posture of a subject, such as a way of standing, a position of the head, arms, and/or legs. The pose may comprise a specific type of poses, such as a specific type of pose that a subject may have when exercising in a gym facility, such as a subject performing squats and/or bench press. A pose may be detected by detecting a subject's key points, such as human joints. The best angle to detect a pose may vary depending on the pose to detect. For example, it may be better to face a subject performing a squatting exercise to detect a squatting pose. On the other hand, it may be better to face the profile of a subject exercising with dumbbells to detect a dumbbell exercise.

In one or more example electronic devices, the second detection model is configured to detect a face. For example, a face may refer to an item generally classified as a face and/or a shape of a face (such as a part of a face of a subject representing a face, a specific face of a subject, such as a face of a certain gender and/or a face of a specific person). In other words, the face may be denoted as a feature, for example a feature that the third detection model may be able to detect, such as trained to detect. For example, the face may comprise a human face and/or a subject face. A face may be detected by detecting a subject's face key points, such as face reference points. Additionally, a face may be detected by the relation between the detected face key points and/or face reference points.

In one or more example electronic devices, the electronic device 300A acting as an electronic device comprises the first optical device OD_1. In other words, the electronic device 300A may be seen as a camera device comprising the electronic device, an optical device. Optionally, the electronic device 300A, such as the processor circuitry 302A, comprises the inference circuitry 302AA configured to run and/or execute a detection model. The electronic device 300A may be seen as a master optical device. In one or more example electronic devices, each optical device may be comprised in an electronic device 300A.

In one or more example electronic devices, the electronic device 300B is a server device.

In one or more example electronic devices, the electronic device 300A, 300B is configured to determine (such as using the processor circuitry 302A, 302B and/or via the interface circuitry 303A, 303B), such as while the detection models are running, whether at least one performance parameter amongst the first performance parameter, the second performance parameter, the third performance parameter, and the fourth performance parameter does not satisfy a third criterion. The third criterion may be seen as a performance criterion, such as a third detection performance criterion. In other words, the third criterion may comprise a third threshold. For example, a performance parameter amongst the first performance parameter, the second performance parameter, the third performance parameter, and the fourth performance parameter does not satisfy the third criterion, when at least one of the performance parameters is below the third threshold. In other words, when the detection performance of a detection model running on an optical device drops below the third threshold the third criterion is not satisfied. The third threshold may be an absolute threshold and/or a relative threshold, such as relative to the performance parameter given when the detection model was assigned to an optical device. As an example, the first detection model with performance parameter 0.95 was assigned to the first optical device. In one or more example electronic devices, the electronic device 300A, 300B is configured, when the at least one performance parameter does not satisfy the third criterion, to reiterate (such as using the processor circuitry 302A, 302B and/or via the interface circuitry 303A, 303B), the obtaining of the first performance parameter and the second performance parameter; the obtaining of the third performance parameter and the fourth performance parameter; and the assignment of the first detection model and the second detection model. In other words, when the detection performance of a detection model running on an optical device drops below the third threshold, the electronic device 300A, 300B is configured to assign, such as re-assign, one or more detection models. In other words, the electronic device 300A, 300B may be configured to trigger the selection of new detection models when the at least one performance parameter does not satisfy the third criterion. When the electronic device 300A, 300B determines that the performance parameters amongst the first performance parameter, the second performance parameter, the third performance parameter, and the fourth performance parameter satisfy the third criterion, the electronic device 300A, 300B comprises to refrain from reiterating. For example, when the detection performance of a detection model running on an optical device drops below 0.95 - delta, for example 0.95 - 0.05, the electronic device 300A, 300B may be configured reiterate one or more of the obtaining of the first performance parameter and the second performance parameter; the obtaining of the third performance parameter and the fourth performance parameter; and the assignment of the first detection model and the second detection model.

In one or more example electronic devices, the electronic device 300A, 300B is configured to determine (such as using the processor circuitry 302A, 302B and/or via the interface circuitry 303A, 303B), based on one or more outputs from one or more of the first detection model, the second detection model, and/or the third detection model, a position of an item, and/or an activity of a subject, and/or a tracking of a subject, such as a tracking of an activity of a subject. For example, electronic device 300A, 300B may be configured to determine an activity of subject in a gym facility. In other words, the electronic device 300A, 300B may be configured to perform one or more of: visual positioning, visual location, visual movement, visual interaction. visual motion, visual gesture, visual action, and visual activity. In other words, the present disclosure may use multiple optical devices, such as multiple cameras, to keep track of subjects, such as individuals, and/or other items, based on one or more outputs from one or more of the first detection model, the second detection model, and/or the third detection model.

In one or more example electronic devices, the electronic device 300A, 300B is configured to obtain further performance parameters indicative of a detection performance of further optical devices running the first detection model, the second detection model, the third detection model, and/or further detection models, to assign the first detection model, the second detection model, the third detection model, and/or further detection models to further optical devices.

Processor circuitry 302A, 302B is optionally configured to perform any of the operations disclosed in Figs. 3A-3D (such as any one or more of S106, S108, S110, S112, S113, S114A, S114B, S114C, S114CA, S114CB, S114CC, S114CD, S114D, S114E, S114F, S115, S116, S118, S120, S121, S122, S124). The operations of the electronic device 300A, 300B may be embodied in the form of executable logic routines (for example, lines of code, software programs, etc.) that are stored on a non-transitory computer readable medium (for example, memory circuitry 301A, 301B) and are executed by processor circuitry 302A, 302B).

Furthermore, the operations of the electronic device 300A, 300B may be considered a method that the electronic device 300A, 300B is configured to carry out. Also, while the described functions and operations may be implemented in software, such functionality may also be carried out via dedicated hardware or firmware, or some combination of hardware, firmware and/or software.

Memory circuitry 301A, 301B may be one or more of a buffer, a flash memory, a hard drive, a removable media, a volatile memory, a non-volatile memory, a random access memory (RAM), or other suitable device. In a typical arrangement, memory circuitry 301A, 301B may include a non-volatile memory for long term data storage and a volatile memory that functions as system memory for processor circuitry 302A, 302B. Memory circuitry 301A, 301B may exchange data with processor circuitry 302A, 302B over a data bus. Control lines and an address bus between memory circuitry 301A, 301B and processor circuitry 302A, 302B also may be present (not shown in Fig. 1). Memory circuitry 301A, 301B is considered a non-transitory computer readable medium.

Memory circuitry 301A, 301B may be configured to store information such as a detection model (first detection model, second detection model, third detection model), optical data, detection data, operational data, performance parameters, items, objects, poses, activities, faces, subjects, positions of items, in a part of the memory.

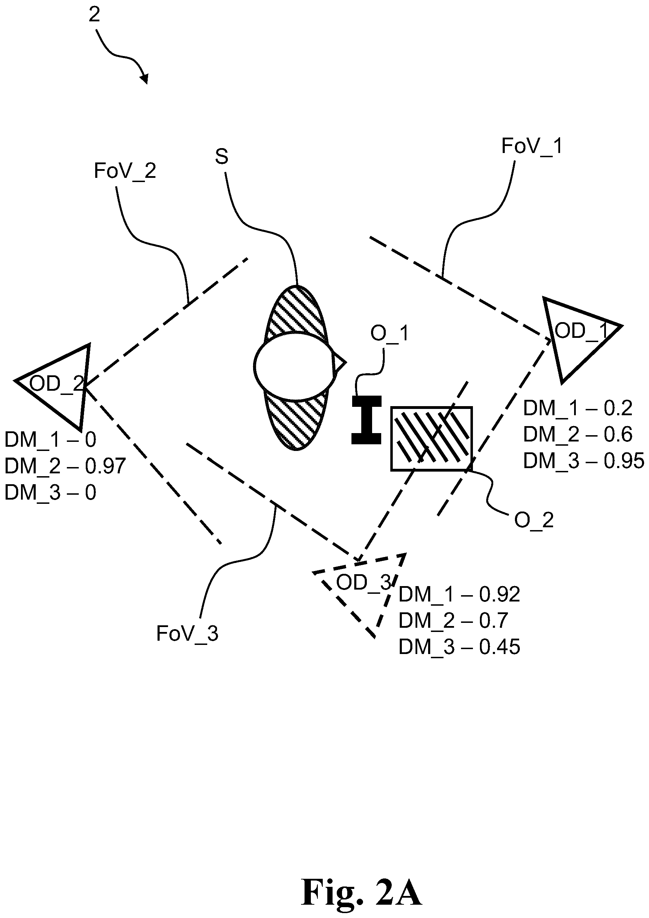

Figs. 2A-2G shows an example detection scenario applying the technique disclosed herein. The detection scenario is an example where a subject S is performing an activity, such as a work-out in an exercising environment, such as at a gym facility.

Fig. 2A shows an example system 2 comprising a first optical device OD_1, a second optical device OD_2, and optionally a third optical device OD_3. The system 2 comprises an electronic device (not shown), such as the electronic device 300A, 300B as disclosed in Fig. 1. The electronic device, the first optical device OD_1, the second optical device OD_2, and optionally the third optical device OD_3 may be seen as a system 2 for optical device collaboration, such as an optical device collaboration system. In one or more example electronic devices, the electronic device comprises the first optical device OD_1. The system may then comprise the electronic device comprising the first optical device OD_1, and an external second optical device OD_2. The electronic device may be seen as a master optical device. In one or more example electronic devices, each optical device may be comprised in an electronic device. The first optical device OD_1 has a first field of view, FoV_1, the second optical device OD_2 has a second field of view, FoV_2, and optionally the third optical device OD_3 has a third field of view, FoV_3. Fig. 2A shows a subject S standing in the field of views of the optical devices, where the subject S is performing a work-out, for example using a first object O_1 and/or a second object O_2. In this example, a first detection model DM_1 may be configured to detect an object, a second detection model DM_2 may be configured to detect a pose, and optionally a third detection model DM_3 may be configured to detect and/or identify a face.

The electronic device has obtained, from the first optical device OD_1, a first performance parameter comprising a confidence score of 0.2 indicative of a detection performance of the first detection model DM_1 on the first optical device OD_1. In other words, the first optical device OD_1 when running the first detection model DM_1 has detected an object with a confidence score of 0.2.

The electronic device has obtained, from the first optical device OD_1, a second performance parameter comprising a confidence score of 0.6 indicative of a detection performance of the second detection model DM_2 on the first optical device OD_1. In other words, the first optical device OD_1 when running the second detection model DM_2 has detected a pose with a confidence score of 0.6.

Optionally, the electronic device has obtained, from the first optical device OD_1, a third performance parameter comprising a confidence score of 0.95 indicative of a detection performance of the third detection model DM_3 on the first optical device OD_1. In other words, the first optical device OD_1 when running the third detection model DM_3 has detected and/or identified a face with a confidence score of 0.95.

The electronic device has obtained, from the second optical device OD_2, a first performance parameter comprising a confidence score of 0.0 indicative of a detection performance of the first detection model DM_1 on the second optical device OD_2. In other words, the second optical device OD_2 when running the first detection model DM_1 has detected an object with a confidence score of 0.0.

The electronic device has obtained, from the second optical device OD_2, a second performance parameter comprising a confidence score of 0.97 indicative of a detection performance of the second detection model DM_2 on the second optical device OD_2. In other words, the first optical device OD_1 when running the second detection model DM_2 has detected a pose with a confidence score of 0.97.

Optionally, the electronic device has obtained, from the second optical device OD_2, a third performance parameter comprising a confidence score of 0.0 indicative of a detection performance of the third detection model DM_3 on the second optical device OD_2. In other words, the second optical device OD_2 when running the third detection model DM_3 has detected and/or identified a face with a confidence score of 0.0.

Optionally, the electronic device has obtained, from the third optical device OD_3, a first performance parameter comprising a confidence score of 0.92 indicative of a detection performance of the first detection model DM_1 on the third optical device OD_3. In other words, the third optical device OD_3 when running the first detection model DM_1 has detected an object with a confidence score of 0.92.

Optionally, the electronic device has obtained, from the third optical device OD_3, a second performance parameter comprising a confidence score of 0.7 indicative of a detection performance of the second detection model DM_2 on the third optical device OD_3. In other words, the third optical device OD_3 when running the second detection model DM_2 has detected a pose with a confidence score of 0.7.

Optionally, the electronic device has obtained, from the third optical device OD_3, a third performance parameter comprising a confidence score of 0.45 indicative of a detection performance of the third detection model DM_3 on the third optical device OD_3. In other words, the third optical device OD_3 when running the third detection model DM_3 has detected and/or identified a face with a confidence score of 0.45.

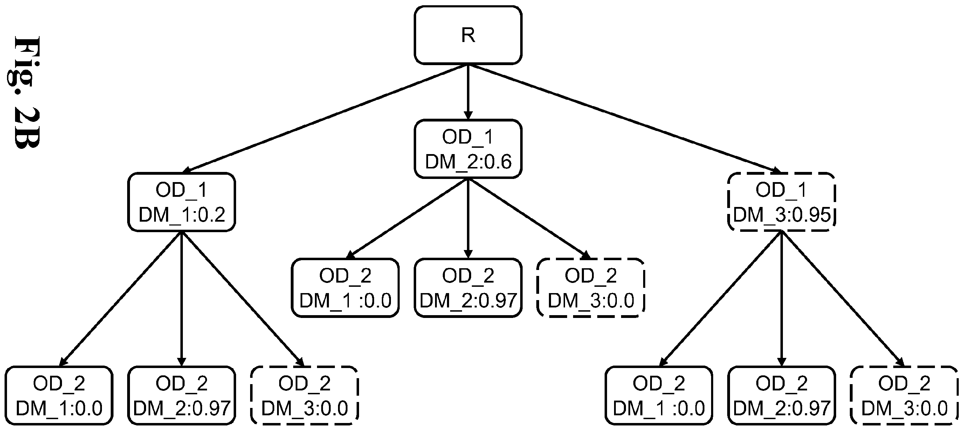

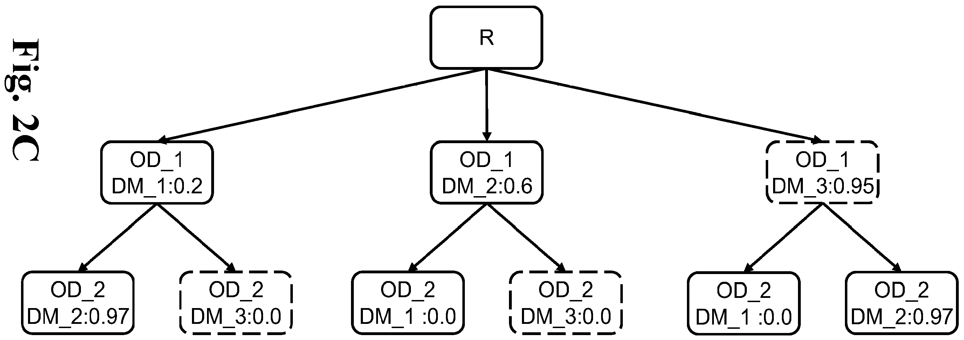

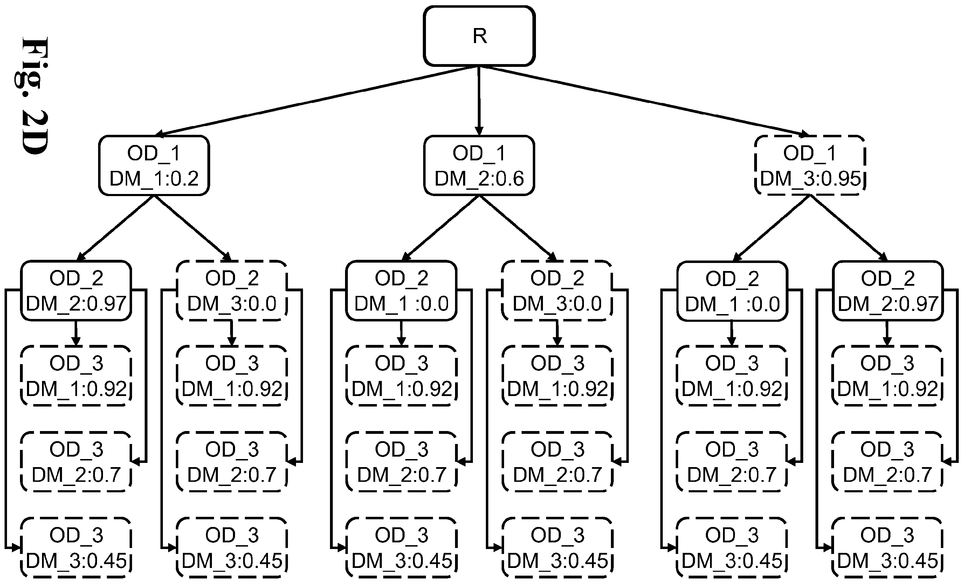

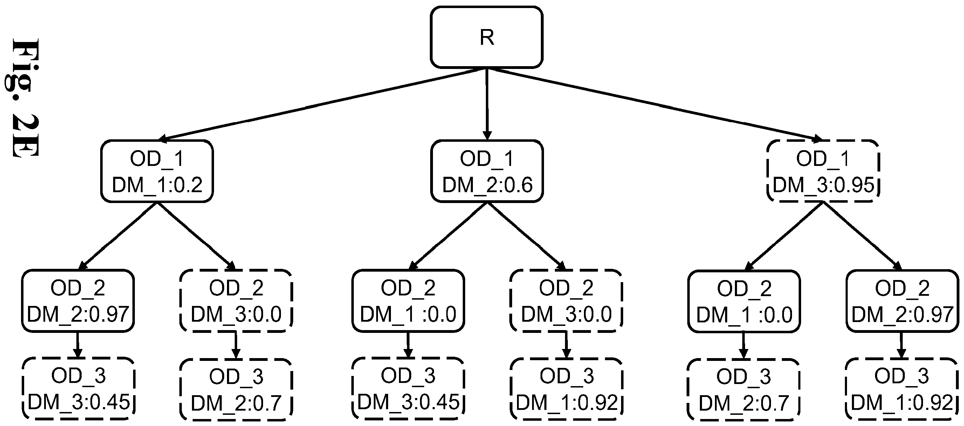

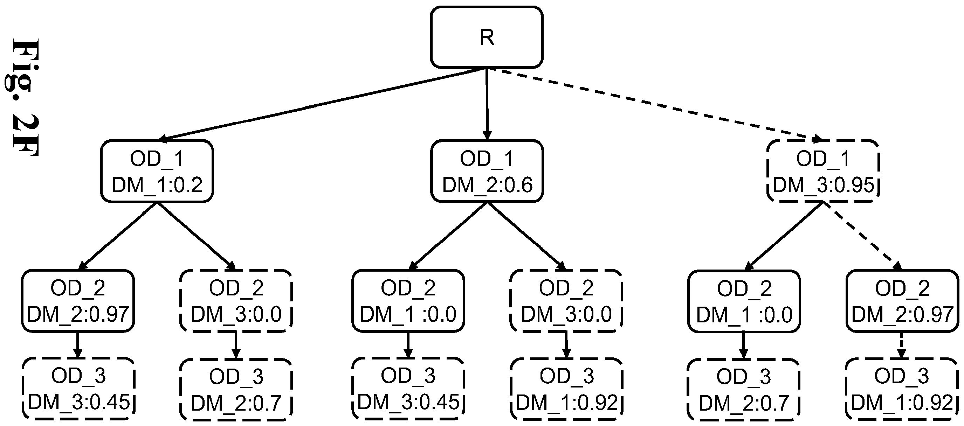

Fig. 2B shows an example decision tree comprising a plurality of nodes generated by the electronic device based on the obtained performance parameters, such as the performance parameters obtained in Fig. 2A. Each node represents an optical device, a detection model, and a corresponding performance parameter. In other words, each node in the decision tree represents a camera, an inference model, and the associated performance number. Each level of the decision tree comprises nodes from one optical device only. The dashed boxes of the decision tree of Figs. 2B, 2C, 2D, 2E, and 2F are optional. As shown in Fig. 2B, the first level comprises nodes from the first optical device OD_1, and the second level comprises nodes from the second optical device OD_2. The electronic device may be configured to when generating the decision tree, to start from a root R of the decision tree. The root R of the decision tree may determine which optical device to start with for the first level of the decision tree.

Fig. 2C shows the example decision tree of Fig. 2B where the electronic device has pruned the decision tree from paths that do not represent at least one of each detection model. For example, for the left path starting with first optical device OD_1 running the first detection model DM_1 with a performance parameter comprising a confidence score of 0.2, the electronic device has pruned the node of the second level comprising the second optical device OD_2 running the first detection model DM_1 comprising a confidence score of 0.0. For example, for the middle path starting with first optical device OD_1 running the second detection model DM_2 with a performance parameter comprising a confidence score of 0.6, the electronic device has pruned the node of the second level comprising the second optical device OD_2 running the second detection model DM_2 comprising a confidence score of 0.97. For example, for the right path starting with first optical device OD_1 running the third detection model DM_3 with a performance parameter comprising a confidence score of 0.95, the electronic device has pruned the node of the second level comprising the second optical device OD_2 running the third detection model DM_3 comprising a confidence score of 0.0.

Fig. 2D shows the example decision tree of Fig. 2C where the electronic device has input data into the decision tree, for example has populated the decision tree with nodes from the third optical device OD_3.

Fig. 2E shows the example decision tree of Fig. 2D where the electronic device has pruned the decision tree from paths that do not represent at least one of each detection model. For example, for the left most path starting with first optical device OD_1 running the first detection model DM_1 with a performance parameter comprising a confidence score of 0.2, the electronic device has pruned the node of the third level comprising the third optical device OD_3 running the first detection model DM_1 and the node of the third level comprising the third optical device OD_3 running the second detection model DM_2. The left most path is therefore left with nodes having optical devices running different detection models.

Fig. 2F shows the example decision tree of Fig. 2E where the electronic device has determined that a path of the decision tree satisfies a first criterion. The electronic device has determined that a path of the decision tree with the largest sum of performance parameters. As shown in Fig. 2F the dashed right most path (such as comprising the dashed arrows) has been determined to satisfy the first criterion of having the largest sum of performance parameters. The path comprises the node with the first optical device OD_1 running the third detection model DM_3 with a performance parameter comprising a confidence score of 0.95, the node with the second optical device OD_2 running the second detection model DM_2 with a performance parameter comprising a confidence score of 0.97, and the node with the third optical device OD_3 running the first detection model DM_1 with a performance parameter comprising a confidence score of 0.92.

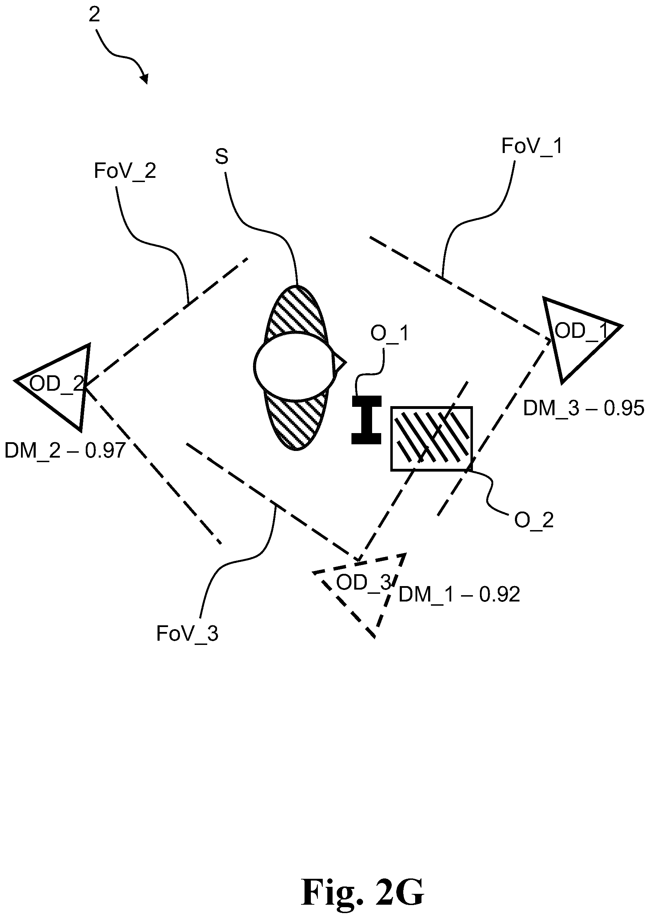

Fig. 2G shows the scenario of Fig. 2A with the system 1, where the electronic device has assigned based on the first performance parameter, the second performance parameter, the third performance parameter, the fourth performance parameter, the fifth performance parameter, the sixth performance parameter, the seventh performance parameter, the eighth performance parameter, and the ninth performance parameter, the first detection model DM_1 to the third optical device OD_3, the second detection model DM_2 to the second optical device OD_2, and the third detection model DM_3 to the first optical device OD_1.

Figs. 3A, 3B, 3C, and 3D show a flow diagram of an example method 100, performed by an electronic device according to the disclosure. The method 100 may be performed for optical device collaboration. In other words, the method 100 may be configured for supporting collaboration between optical devices, such as detection collaboration between optical devices. The method 100 may be performed for assignment of detection models for optical devices. The method 100 may be performed by an electronic device disclosed herein, such as electronic device 300A, 300B of Fig. 1.

The method 100 comprises obtaining S102, from a first optical device, a first performance parameter indicative of a detection performance of a first detection model on the first optical device and a second performance parameter indicative of a detection performance of a second detection model on the first optical device. The first performance parameter may be seen as a performance of the first optical device running the first detection model. The second performance parameter may be seen as a performance of the first optical device running the second detection model.

The method 100 comprises obtaining S104, from a second optical device, a third performance parameter indicative of a detection performance of the first detection model on the second optical device and a fourth performance parameter indicative of a detection performance of the second detection model on the second optical device. The third performance parameter may be seen as a performance of the second optical device running the first detection model. The fourth performance parameter may be seen as a performance of the second optical device running the second detection model. Obtaining, from an optical device, a performance parameter may for example comprise retrieving, receiving, determining, and/or selecting a performance parameter.

In one or more examples methods, the method 100 comprises distributing the performance parameters from each optical device to every other optical device. For example, when the electronic device comprises the first optical device. In one or more examples methods, each optical device may be comprised in an electronic device.

In one or more examples methods, the method 100 comprises obtaining the performance parameters by a master optical device from every other optical device. The method 100 may then comprise obtaining the performance parameters from the master optical device.

The method 100 comprises assigning S114, based on the first performance parameter, the second performance parameter, the third performance parameter, and the fourth performance parameter, the first detection model to the first optical device or the second optical device and the second detection model to the first optical device or the second optical device. In other words, the method 100 may comprise assigning the second detection model to the optical device that has not been assigned to a detection model, such as assigning the unassigned or remaining optical device and/or the unassigned or remaining detection model. In other words, each optical device may be running a different model. Assigning a detection model to an optical device may be seen as assigning a detection model that an optical device is assigned to run for a given period. Assigning a detection model to an optical device may be seen as allocating a detection model to an optical device and/or associating a detection model to an optical device. By assigning detection models based on the performance of the optical devices when running the detection models, the present disclosure improves the capability allocation when performing a task of detecting items and/or tracking activity and/or subjects. In other words, since the detection models are distributed among the optical devices, each detection model is run within the inference capability of the optical device and on the optical device having the best performance for a given detection model. It may be appreciated that the present disclosure allows for collaboration of detection for optical devices. For example, the present disclosure allows for collaboration of detection for optical devices by assigning detection models to the optical devices, based on the performance of the detection models on the optical devices.

Optionally, the method 100 may comprise assigning the first detection model and the second detection model to the same optical device. For example, when the first optical device has a better performance when running the first detection model and the second detection model than the performance of the second optical device when running the first detection model and the second detection model, the method may comprise assigning the first detection model and the second detection model to the first optical device. It may be appreciated that in this scenario the first optical device has the capability of running both the first detection model and the second detection model for the same frame.

In one or more examples methods, the assignment S114 of the first detection model and/or the second detection model comprises generating S114A a decision tree comprising a plurality of nodes. Each node represents an optical device, a detection model, and a corresponding performance parameter. In other words, the method 100 comprises generating a decision tree comprising a plurality of nodes. The method 100 may comprise creating nodes only for an inference where an optical device has run a detection model and have determined an associated performance parameter for the detection model run on the optical device. The method 100 may comprise when generating the decision tree, to start from a root of the decision tree. The root of the decision tree may determine which optical device to start with for a first level of the decision tree.

In one or more examples methods, the assignment S114 of the first detection model and/or the second detection model comprises pruning S114B the decision tree from paths that do not represent at least one of each detection model. Pruning may be seen as removing the paths that do not represent at least one of each detection model from the decision tree. In other words, the method 100 may comprise pruning the decision tree from paths that do not represent at least one of each detection model. It may be appreciated that the method 100 may comprise pruning the decision tree from paths that do not include at least one of each model and their performance parameters. A path may be seen as comprising at least two nodes, such as at least one node from each level of the decision tree. Optionally, a path may comprise more than one of each detection model, for example when the number of optical devices is larger than the number of detection models. In other words, the method 100 may comprise ensuring that each type of detection model, such as the first detection model and the second detection model, is executed on at least one optical device, such as for each frame. In other words, a criterion may comprise to prune the decision tree from paths that do not represent at least one of each detection model.

In one or more examples methods, the assignment S114 of the first detection model and/or the second detection model comprises determining S114C whether a path of the decision tree satisfies a first criterion. The first criterion may be seen as a detection performance criterion. The method 100 may comprise determining whether the performance parameters associated with the nodes of a path of the decision tree are above a detection performance. The first criterion may comprise a first threshold. For example, a path of the decision tree satisfies the first criterion, when the performance parameter is above the first threshold. When it is determined that a path of the decision tree satisfies the first criterion, the method comprises assigning the detection models, such as the first detection model, the second detection model, and/or the third detection model, to the optical devices, such as the first optical device, the second optical device, and/or the third optical device, in accordance with the nodes of the path that satisfies the first criterion. When it is determined that no path of the decision tree satisfies the first criterion, the method comprises refraining S113 from assigning the detection models to the optical devices.

In one or more examples methods, the assignment S114 of the first detection model and/or the second detection model comprises determining S114D whether a performance parameter of a node of the decision tree does not satisfy a second criterion. In other words, the method 100 may comprise determining whether a performance parameter of a node of the decision tree does not satisfy a second criterion. The second criterion may be seen as a performance criterion, such as a second detection performance criterion. In other words, the second criterion may comprise a second threshold. For example, the performance parameter (such as the detection performance) of a node (such as associated with a node) of the decision tree does not satisfy the second criterion, when the performance parameter is below the second threshold.

In one or more examples methods, the assignment S114 of the first detection model and/or the second detection model comprises pruning S114E the node that has a performance parameter which does not satisfy the second criterion. Pruning the node that has a performance parameter which does not satisfy the second criterion may be seen as removing the nodes that do not satisfy the second criterion. In other words, the method 100 may comprise pruning the node (such as one or more nodes) that has a performance parameter which does not satisfy the second criterion. The second criterion may be seen as a detection performance criterion. In other words, when it is determined that a performance parameter of a node of the decision tree does not satisfy the second criterion, the method comprises pruning S114E the node that has a performance parameter which does not satisfy the second criterion. When it is determined that a performance parameter of a node of the decision tree satisfies the second criterion, the method comprises refraining S115 from pruning the node that has a performance parameter which satisfies the second criterion.

In one or more examples methods, the determination S114C of whether a path of the decision tree satisfies the first criterion comprises determining S114CA a path of the decision tree with the largest sum of performance parameters. In other words, the method 100 may comprise determining a path of the decision tree with the largest sum of performance parameters. In other words, the method 100 may comprise determining which path has the largest sum of performance parameters associated with the nodes of a path.

In one or more examples methods, the determination S114C of whether a path of the decision tree satisfies the first criterion comprises determining S114CB a path of the decision tree with the largest sum of weighted performance parameters. In other words, the method 100 may comprise determining a path of the decision tree with the largest sum of weighted performance parameters. In other words, the method 100 may comprise determining which path has the largest sum of weighted performance parameters associated with the nodes of a path. In one or more example methods, the method 100 may comprise determining a path of the decision tree with the largest sum of weighted performance parameters per detection model. For example, a certain model may have a higher priority than other models, and the method 100 may comprise assigning the detection models such that the given detection model having higher priority has the best performance.

In one or more examples methods, the determination S114C of whether a path of the decision tree satisfies the first criterion comprises determining S114CC a path of the decision tree with the largest sum of weighted performance parameters minus the variance of the detection performances. In other words, the method 100 may comprise determining a path of the decision tree with the largest sum of weighted performance parameters minus the variance of the detection performances. In other words, the method 100 may comprise determining which path has the largest sum of weighted performance parameters associated with the nodes of a path minus the variance of the detection performances. In one or more example methods, the method 100 may comprise determining a path of the decision tree with the largest sum of weighted performance parameters minus the variance of the detection performances per detection model. For example, a certain model may have a higher priority than other models, and the method 100 may comprise assigning the detection models such that the given detection model having higher priority has the best performance.

In one or more examples methods, the determination S114C of whether a path of the decision tree satisfies the first criterion comprises considering S114CD a number of detections. In other words, the method 100 may comprise considering a number of detections. The method 100 may comprise considering a number of detections when determining the path of the decision tree with the largest sum of performance parameters, the path of the decision tree with the largest sum of weighted performance parameters, and/or the path of the decision tree with the largest sum of weighted performance parameters minus the variance of the detection performances. In other words, a performance parameter may comprise and/or be based on a number of detections and/or inferences of an optical device. The number of detections may be considered when determining a performance parameter. For example, paths having a larger number of detections may be considered as being superior to paths with a lower number of detections.

In one or more examples methods, the assignment S114 of the first detection model and/or the second detection model comprises determining S114F, based on the first performance parameter, the second performance parameter, the third performance parameter, and the fourth performance parameter, an optical device configuration indicative of a detection model to be used by the first optical device and a detection model to be used by the second optical device. In other words, the method 100 may comprise determining an optical device configuration indicative of a detection model to be used by the first optical device and a detection model to be used by the second optical device. The optical device configuration may be seen as a configuration indicating which detection model to be used by which optical device. In one or more example methods, the assignment of the first detection model and/or the second detection model is based on the optical device configuration. The method 100 may comprise transmitting the optical device configuration to each optical device. For example, the optical device configuration may comprise a first configuration for the first optical device, a second configuration for the second optical device, and/or a third configuration for the third optical device. The method 100 may comprise transmitting the optical device configuration to a master optical device which may then distribute the optical device configuration to the other optical devices.

In one or more examples methods, the method comprises obtaining S106, from a third optical device, a fifth performance parameter indicative of a detection performance of the first detection model on the third optical device and a sixth performance parameter indicative of a detection performance of the second detection model on the third optical device. The fifth performance parameter may be seen as a performance of the third optical device running the first detection model. The sixth performance parameter may be seen as a performance of the third optical device running the second detection model.

In one or more examples methods, the method comprises assigning S116, based on the fifth performance parameter and the sixth performance parameter, the first detection model to the first optical device, the second optical device, or the third optical device, and the second detection model, to the first optical device, the second optical device, or the third optical device. In other words, the method 100 may comprise assigning the second detection model to one of the optical devices that has not been assigned to a detection model, such as assigning one of the unassigned or remaining optical device and/or the unassigned or remaining detection model. In other words, each optical device may be running a different detection model and one optical device may not run a detection model.

In one or more examples methods, the method comprises obtaining S108, from the first optical device, a seventh performance parameter indicative of a detection performance of a third detection model on the first optical device. The seventh performance parameter may be seen as a performance of the first optical device running the third detection model. In one or more examples methods, the method comprises obtaining S110, from the second optical device, an eighth performance parameter indicative of a detection performance of the third detection model on the second optical device. The eighth performance parameter may be seen as a performance of the second optical device running the third detection model. In one or more examples methods, the method comprises obtaining S112, from the third optical device, a ninth performance parameter indicative of a detection performance of the third detection model on the third optical device. The ninth performance parameter may be seen as a performance of the third optical device running the third detection model.

In one or more examples methods, the method comprises assigning S118, based on the seventh performance parameter, the eighth performance parameter, and the ninth performance parameter, the first detection model to the first optical device, the second optical device, or the third optical device, the second detection model to the first optical device, the second optical device, or the third optical device, and the third detection model to the first optical device, the second optical device, or the third optical device. In other words, the method 100 may comprise assigning the second detection model to the one of the optical devices that has not been assigned to a detection model, such as assigning one of the unassigned or remaining optical devices and/or one the unassigned or remaining detection models. In other words, each optical device may be running a different model. In this scenario, there is three optical devices and three detection models. Therefore, at least one optical device will not have a detection model assigned. Optionally, when an optical device has the capability of running more than one detection model, one or two optical devices may remain unassigned, such as without a detection model assigned to them.

In one or more examples methods, the first detection model is configured to detect an object. In other words, the method 100 may comprise detecting an object using the first detection model.

In one or more examples methods, the second detection model is configured to detect a pose. In other words, the method 100 may comprise detecting a pose using the second detection model.

In one or more examples methods, the third detection model is configured to detect and/or identify a face. In other words, the method 100 may comprise detecting a face using the third detection model.

In one or more examples methods, the electronic device comprises the first optical device.

In one or more examples methods, the electronic device is a server device.

In one or more examples methods, the method comprises determining S120 whether at least one performance parameter amongst the first performance parameter, the second performance parameter, the third performance parameter, and the fourth performance parameter does not satisfy a third criterion. The third criterion may be seen as a performance criterion, such as a third detection performance criterion. In other words, the third criterion may comprise a third threshold. For example, a performance parameter amongst the first performance parameter, the second performance parameter, the third performance parameter, and the fourth performance parameter does not satisfy the third criterion, when at least one of the performance parameters is below the third threshold. In other words, when the detection performance of a detection model running on an optical device drops below the third threshold the third criterion is not satisfied.

In one or more examples methods, the method comprises reiterating S122, when the at least one performance parameter does not satisfy the third criterion, the obtaining S102 of the first performance parameter and the second performance parameter. In one or more examples methods, the method comprises reiterating S122, when the at least one performance parameter does not satisfy the third criterion, the obtaining S104 of the third performance parameter and the fourth performance parameter. In one or more examples methods, the method comprises reiterating S122, when the at least one performance parameter does not satisfy the third criterion, the assignment S114 of the first detection model and the second detection model. When it is determined that the performance parameters amongst the first performance parameter, the second performance parameter, the third performance parameter, and the fourth performance parameter satisfy the third criterion, the method comprises refraining S121 from reiterating.

In one or more examples methods, the method comprises determining S124, based on one or more outputs from one or more of the first detection model and the second detection model, a position of an item, an activity of a subject (such as walking, running), a tracking of a subject, such as a tracking of an activity of a subject. For example, the method 100 may comprise determining an activity of subject in a gym facility. In other words, the present disclosure may use multiple optical devices, such as multiple cameras, to keep track of subjects, such as individuals, and/or other items, based on one or more outputs from one or more of the first detection model, the second detection model, and/or the third detection model.

In one or more example methods, the method 100 may comprise obtaining further performance parameters indicative of a detection performance of further optical devices running the first detection model, the second detection model, the third detection model, and/or further detection models, to assign the first detection model, the second detection model, the third detection model, and/or further detection models to further optical devices.

Examples of methods and server devices according to the disclosure are set out in the following items:
Item 1. An electronic device (300A, 300B) comprising:
   - memory circuitry (301A, 301B);
   - processor circuitry (302A, 302B);
   - and interface circuitry (303A, 303B);
   wherein the electronic device (300A, 300B) is configured to:
   - obtain, from a first optical device, a first performance parameter indicative of a detection performance of a first detection model on the first optical device and a second performance parameter indicative of a detection performance of a second detection model on the first optical device;
   - obtain, from a second optical device, a third performance parameter indicative of a detection performance of the first detection model on the second optical device and a fourth performance parameter indicative of a detection performance of the second detection model on the second optical device;
   - assign, based on the first performance parameter, the second performance parameter, the third performance parameter, and the fourth performance parameter, the first detection model to the first optical device or the second optical device and the second detection model to the first optical device or the second optical device.
Item 2. The electronic device according to item 1, wherein the assignment of the first detection model and/or the second detection model comprises to generate a decision tree comprising a plurality of nodes, and where each node represents an optical device, a detection model, and a corresponding performance parameter.
Item 3. The electronic device according to item 2, wherein the assignment of the first detection model and/or the second detection model comprises to prune the decision tree from paths that do not represent at least one of each detection model.
Item 4. The electronic device according to any of items 2-3, wherein the assignment of the first detection model and/or the second detection model comprises to determine whether a path of the decision tree satisfies a first criterion.
Item 5. The electronic device according to any of items 2-4, wherein the assignment of the first detection model and/or the second detection model comprises to determine whether a performance parameter of a node of the decision tree does not satisfy a second criterion.
Item 6. The electronic device according to item 5, wherein the assignment of the first detection model and/or the second detection model comprises to prune the node that has a performance parameter which does not satisfy the second criterion.
Item 7. The electronic device according to any of items 4-6, wherein the determination of whether a path of the decision tree satisfies the first criterion comprises to determine a path of the decision tree with the largest sum of performance parameters.
Item 8. The electronic device according to any of items 4-7, wherein the determination of whether a path of the decision tree satisfies the first criterion comprises to determine a path of the decision tree with the largest sum of weighted performance parameters.
Item 9. The electronic device according to any of items 4-8, wherein the determination of whether a path of the decision tree satisfies the first criterion comprises to determine a path of the decision tree with the largest sum of weighted performance parameters minus the variance of the detection performances.
Item 10. The electronic device according to any of items 4-9, wherein the determination of whether a path of the decision tree satisfies the first criterion comprises to consider a number of detections.
Item 11. The electronic device according to any of the previous items, wherein the assignment of the first detection model and/or the second detection model comprises to determine, based on the first performance parameter, the second performance parameter, the third performance parameter, and the fourth performance parameter, an optical device configuration indicative of a detection model to be used by the first optical device and a detection model to be used by the second optical device.
Item 12. The electronic device according to any of the previous items, wherein the electronic device (300A, 300B) is configured to:
   - obtain, from a third optical device, a fifth performance parameter indicative of a detection performance of the first detection model on the third optical device and a sixth performance parameter indicative of a detection performance of the second detection model on the third optical device;
   - assign, based on the fifth performance parameter and the sixth performance parameter, the first detection model to the first optical device, the second optical device, or the third optical device, and the second detection model, to the first optical device, the second optical device, or the third optical device.
Item 13. The electronic device according to item 12, wherein the electronic device (300A, 300B) is configured to:
   - obtain, from the first optical device, a seventh performance parameter indicative of a detection performance of a third detection model on the first optical device;
   - obtain, from the second optical device, an eighth performance parameter indicative of a detection performance of the third detection model on the second optical device;
   - obtain, from the third optical device, a ninth performance parameter indicative of a detection performance of the third detection model on the third optical device;
   - assign, based on the seventh performance parameter, the eighth performance parameter, and the ninth performance parameter, the first detection model to the first optical device, the second optical device, or the third optical device, the second detection model to the first optical device, the second optical device, or the third optical device, and the third detection model to the first optical device, the second optical device, or the third optical device.
Item 14. The electronic device according to any of the previous items, wherein the first detection model is configured to detect an object.
Item 15. The electronic device according to any of the previous items, wherein the second detection model is configured to detect a pose.
Item 16. The electronic device according to any of items 13-15, wherein the third detection model is configured to detect and/or identify a face.
Item 17. The electronic device according to any of the previous items, wherein the electronic device comprises the first optical device.
Item 18. The electronic device according to any of the previous items, wherein the electronic device is a server device.
Item 19. The electronic device according to any of the previous items, wherein the electronic device (300A, 300B) is configured to:
   - determine whether at least one performance parameter amongst the first performance parameter, the second performance parameter, the third performance parameter, and the fourth performance parameter does not satisfy a third criterion; and
   - wherein the electronic device is configured to reiterate, when the at least one performance parameter does not satisfy the third criterion:
      ∘ the obtaining of the first performance parameter and the second performance parameter;
      ∘ the obtaining of the third performance parameter and the fourth performance parameter; and
      ∘ the assignment of the first detection model and the second detection model.
Item 20. The electronic device according to any of the previous items, wherein the electronic device (300A, 300B) is configured to determine, based on one or more outputs from one or more of the first detection model and the second detection model, a position of an item.
Item 21. A method (100), performed by an electronic device, the method comprising:
   - obtaining (S102), from a first optical device, a first performance parameter indicative of a detection performance of a first detection model on the first optical device and a second performance parameter indicative of a detection performance of a second detection model on the first optical device;
   - obtaining (S104), from a second optical device, a third performance parameter indicative of a detection performance of the first detection model on the second optical device and a fourth performance parameter indicative of a detection performance of the second detection model on the second optical device;
   - assigning (S114), based on the first performance parameter, the second performance parameter, the third performance parameter, and the fourth performance parameter, the first detection model to the first optical device or the second optical device and the second detection model to the first optical device or the second optical device.
Item 22. The method according to item 21, wherein the assignment (S114) of the first detection model and/or the second detection model comprises:
   - generating (S114A) a decision tree comprising a plurality of nodes, and where each node represents an optical device, a detection model, and a corresponding performance parameter.
Item 23. The method according to item 22, wherein the assignment (S114) of the first detection model and/or the second detection model comprises:
   - pruning (S114B) the decision tree from paths that do not represent at least one of each detection model.
Item 24. The method according to any of items 22-23, wherein the assignment (S114) of the first detection model and/or the second detection model comprises:
   - determining (S114C) whether a path of the decision tree satisfies a first criterion.
Item 25. The method according to any of items 22-24, wherein the assignment (S114) of the first detection model and/or the second detection model comprises:
   - determining (S114D) whether a performance parameter of a node of the decision tree does not satisfy a second criterion.
Item 26. The method according to item 25, wherein the assignment (S114) of the first detection model and/or the second detection model comprises:
   - pruning (S114E) the node that has a performance parameter which does not satisfy the second criterion.
Item 27. The method according to any of items 24-26, wherein the determination (S114C) of whether a path of the decision tree satisfies the first criterion comprises:
   - determining (S114CA) a path of the decision tree with the largest sum of performance parameters.
Item 28. The method according to any of items 24-27, wherein the determination (S114C) of whether a path of the decision tree satisfies the first criterion comprises:
   - determining (S114CB) a path of the decision tree with the largest sum of weighted performance parameters.
Item 29. The method according to any of items 24-28, wherein the determination (S114C) of whether a path of the decision tree satisfies the first criterion comprises:
   - determining (S114CC) a path of the decision tree with the largest sum of weighted performance parameters minus the variance of the detection performances.
Item 30. The method according to any of items 24-29, wherein the determination (S114C) of whether a path of the decision tree satisfies the first criterion comprises:
   - considering (S114CD) a number of detections.
Item 31. The method according to any of items 21-30, wherein the assignment (S114) of the first detection model and/or the second detection model comprises:
   - determining (S114F), based on the first performance parameter, the second performance parameter, the third performance parameter, and the fourth performance parameter, an optical device configuration indicative of a detection model to be used by the first optical device and a detection model to be used by the second optical device.
Item 32. The method according to any of items 21-31, the method comprising:
   - obtaining (S106), from a third optical device, a fifth performance parameter indicative of a detection performance of the first detection model on the third optical device and a sixth performance parameter indicative of a detection performance of the second detection model on the third optical device;
   - assigning (S116), based on the fifth performance parameter and the sixth performance parameter, the first detection model to the first optical device, the second optical device, or the third optical device, and the second detection model, to the first optical device, the second optical device, or the third optical device.
Item 33. The method according to any of items 21-32, the method comprising:
   - obtaining (S108), from the first optical device, a seventh performance parameter indicative of a detection performance of a third detection model on the first optical device;
   - obtaining (S110), from the second optical device, an eighth performance parameter indicative of a detection performance of the third detection model on the second optical device;
   - obtaining (S112), from the third optical device, a ninth performance parameter indicative of a detection performance of the third detection model on the third optical device;
   - assigning (S118), based on the seventh performance parameter, the eighth performance parameter, and the ninth performance parameter, the first detection model to the first optical device, the second optical device, or the third optical device, the second detection model to the first optical device, the second optical device, or the third optical device, and the third detection model to the first optical device, the second optical device, or the third optical device.
Item 34. The method according to any of items 21-33, wherein the first detection model is configured to detect an object.
Item 35. The method according to any of items 21-34, wherein the second detection model is configured to detect a pose.
Item 36. The method according to any of items 33-35, wherein the third detection model is configured to detect and/or identify a face.
Item 37. The method according to any of items 21-36, wherein the electronic device comprises the first optical device.
Item 38. The method according to any of items 21-37, wherein the electronic device is a server device.
Item 39. The method according to any of items 21-38, the method comprising:
   - determining (S120) whether at least one performance parameter amongst the first performance parameter, the second performance parameter, the third performance parameter, and the fourth performance parameter does not satisfy a third criterion; and
   - wherein the method comprising reiterating (S122), when the at least one performance parameter does not satisfy the third criterion:
      ∘ the obtaining (S102) of the first performance parameter and the second performance parameter;
      ∘ the obtaining (S104) of the third performance parameter and the fourth performance parameter; and
      ∘ the assignment (S114) of the first detection model and the second detection model.
Item 40. The method according to any of items 21-39, the method comprising:
   - determining (S124), based on one or more outputs from one or more of the first detection model and the second detection model, a position of an item.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figures comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed.

The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the examples may be implemented at least in part by means of both hardware and software, and that several "means", "units" or "devices" may be represented by the same item of hardware.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than or equal to 10% of, within less than or equal to 5% of, within less than or equal to 1% of, within less than or equal to 0.1% of, and within less than or equal to 0.01% of the stated amount. If the stated amount is 0 (e.g., none, having no), the above recited ranges can be specific ranges, and not within a particular % of the value.

The various example methods, devices, and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. An electronic device (300A, 300B) comprising:
- memory circuitry (301A, 301B);
- processor circuitry (302A, 302B);
- and interface circuitry (303A, 303B);
wherein the electronic device (300A, 300B) is configured to:
- obtain, from a first optical device, a first performance parameter indicative of a detection performance of a first detection model on the first optical device and a second performance parameter indicative of a detection performance of a second detection model on the first optical device;
- obtain, from a second optical device, a third performance parameter indicative of a detection performance of the first detection model on the second optical device and a fourth performance parameter indicative of a detection performance of the second detection model on the second optical device; and
- assign, based on the first performance parameter, the second performance parameter, the third performance parameter, and the fourth performance parameter, the first detection model to the first optical device or the second optical device and the second detection model to the first optical device or the second optical device.

2. The electronic device according to claim 1, wherein the assignment of the first detection model and/or the second detection model comprises to generate a decision tree comprising a plurality of nodes, and where each node represents an optical device, a detection model, and a corresponding performance parameter.

3. The electronic device according to claim 2, wherein the assignment of the first detection model and/or the second detection model comprises to prune the decision tree from paths that do not represent at least one of each detection model.

4. The electronic device according to any of claims 2-3, wherein the assignment of the first detection model and/or the second detection model comprises to determine whether a path of the decision tree satisfies a first criterion.

5. The electronic device according to any of claims 2-4, wherein the assignment of the first detection model and/or the second detection model comprises to determine whether a performance parameter of a node of the decision tree does not satisfy a second criterion.

6. The electronic device according to claim 5, wherein the assignment of the first detection model and/or the second detection model comprises to prune the node that has a performance parameter which does not satisfy the second criterion.

7. The electronic device according to any of claims 4-6, wherein the determination of whether a path of the decision tree satisfies the first criterion comprises to determine a path of the decision tree with the largest sum of performance parameters.

8. The electronic device according to any of claims 4-7, wherein the determination of whether a path of the decision tree satisfies the first criterion comprises to consider a number of detections.

9. The electronic device according to any of the previous claims, wherein the assignment of the first detection model and/or the second detection model comprises to determine, based on the first performance parameter, the second performance parameter, the third performance parameter, and the fourth performance parameter, an optical device configuration indicative of a detection model to be used by the first optical device and a detection model to be used by the second optical device.

10. The electronic device according to any of the previous claims, wherein the electronic device (300A, 300B) is configured to:
- obtain, from the first optical device, a seventh performance parameter indicative of a detection performance of a third detection model on the first optical device, wherein the third detection model is configured to detect and/or identify a face;
- obtain, from the second optical device, an eighth performance parameter indicative of a detection performance of the third detection model on the second optical device;
- obtain, from the third optical device, a ninth performance parameter indicative of a detection performance of the third detection model on the third optical device;
- assign, based on the seventh performance parameter, the eighth performance parameter, and the ninth performance parameter, the first detection model to the first optical device, the second optical device, or the third optical device, the second detection model to the first optical device, the second optical device, or the third optical device, and the third detection model to the first optical device, the second optical device, or the third optical device.

11. The electronic device according to any of the previous claims, wherein the first detection model is configured to detect an object and/or the second detection model is configured to detect a pose.

12. The electronic device according to any of the previous claims, wherein the electronic device (300A) comprises the first optical device.

13. The electronic device according to any of the previous claims, wherein the electronic device (300A, 300B) is configured to:
- determine whether at least one performance parameter amongst the first performance parameter, the second performance parameter, the third performance parameter, and the fourth performance parameter does not satisfy a third criterion; and
- wherein the electronic device is configured to reiterate, when the at least one performance parameter does not satisfy the third criterion:
∘ the obtaining of the first performance parameter and the second performance parameter;
∘ the obtaining of the third performance parameter and the fourth performance parameter; and
∘ the assignment of the first detection model and the second detection model.

14. The electronic device according to any of the previous claims, wherein the electronic device (300A, 300B) is configured to determine, based on one or more outputs from one or more of the first detection model and the second detection model, a position of an item.

15. A method (100), performed by an electronic device, the method comprising:
- obtaining (S102), from a first optical device, a first performance parameter indicative of a detection performance of a first detection model on the first optical device and a second performance parameter indicative of a detection performance of a second detection model on the first optical device;
- obtaining (S104), from a second optical device, a third performance parameter indicative of a detection performance of the first detection model on the second optical device and a fourth performance parameter indicative of a detection performance of the second detection model on the second optical device; and
- assigning (S114), based on the first performance parameter, the second performance parameter, the third performance parameter, and the fourth performance parameter, the first detection model to the first optical device or the second optical device and the second detection model to the first optical device or the second optical device.
